# EUROPEAN PATENT APPLICATION

(11) **EP 1 271 854 A2**
(43) Date of publication of application: **02.01.2003**
(21) Application number: 02004103.4
(22) Date of filing: 25.02.2002
(51) Int. Cl.: H04L 12/437

(54) **Fault tolerant voting system and method**

(30) Priority: 29.06.2001 GB 0116011
(71) Applicant: MOTOROLA, INC., Schaumburg, IL 60196 (US)
(72) Inventor: Miller, Peter, Shefford, Bedfordshire SG17 5RY (GB)
(74) Representative: Gibson, Sarah Jane

(57) **Abstract**

A fault tolerant voting system and method (1) for use in distributed microcontroller and computing systems having a number of distributed microcontroller nodes (N1-N3). Bi-directional busses of links (2-4,12,21,13,31,23,32) coupled to each of the nodes via a ring arrangement. Each node is arranged to transmit signals on the bus in clockwise (12,23,31) and anti-clockwise (13,32,21) directions. In this way, the signals can be compared to in each node to determine and obtain the best correct result within a predetermined acceptable tolerance used in high precision safety critical uses, such as, automotive applications like braking systems.

Preferably, the signals are compared to a median value.

## Description

### FIELD OF THE INVENTION

The present invention relates generally to a fault tolerant voting system and method. More specifically, the invention relates to voting systems in, for example but not exclusively, distributed microcontroller and computing systems used in high precision safety critical uses, such as, those used in automotive applications.

### BACKGROUND OF THE DISCLOSURE

Distributed computing or microcontroller systems are used widely in many fields for high precision and safety critical uses, for example, in automotive electronics applications. Braking systems are an example of an automotive electronic application that may utilize distributed microcontroller systems. Currently, distributed microcontroller systems are increasingly being used in braking systems known as "brake-by-wire", in place of mechanical and/or traditional hydraulic based braking systems.

In such high precision and safety critical applications, like the brake-by-wire system, it is important that the systems are tolerant to a faults in the system due to, for example, faulty microcontrollers, and/or faulty buses or links connecting the microcontrollers in the system.

There are a number of fault tolerant systems and methods used. For example, duplicate busses or links to connect microcontrollers together may be used to help ensure signals to and from the microcontrollers are communicated in case of a fault in one bus or link. Similarly, duplicate or redundant microcontrollers may be provided that monitor and crosscheck with the primary microcontrollers to replace the primary microcontrollers in case any malfunctions in the primary microcontrollers are detected by the duplicate microcontrollers. These methods provide some degree of fault detection and fault tolerance, but require significant overhead in terms of expense, die space, and complexity due to the requirement of duplicate and redundant hardware.

Another fault tolerant system and method is described in GB2348782A, which provides a fault location system for a distributed microcontroller network having a bi-directional bus or link connecting each microcontroller node forming a ring arrangement network. In this way, by monitoring the received signals and comparing these signals with each other and/or with the transmitted signals from each node, each node is able to identify and locate faults occurring anywhere in the system. Other systems also provide voting schemes that require significant multiple communications of the same parameters to crosscheck and re-cross-check during the process.

However, the known systems and methods do not provide a voting system in a distributed microcontroller network that determine a correct result from different signals received from the various nodes at a one time communication for each value sent and received from each node, and in particular, in the presence of at least one fault somewhere in the system, without multiple communication to crosscheck. Such an occurrence happens, for example, in braking systems, where wheel and speed measurements may be slightly different at each node. The variation of the wheel and speed measurement signals causes a single floating-point value that will not necessarily be identical at each node. In the known systems and methods, there is no voting system to accurately and quickly identify the correct result in the presence of a floating-point value. Therefore, there is a need in the art for a voting system and method in fault tolerant systems for use in high precision safety critical applications.

### STATEMENT OF THE INVENTION

In accordance with the present invention there is provided fault tolerant voting system as claimed in claim 1, and a fault tolerant voting method as claimed in claim 5.

### BRIEF DESCRIPTION OF THE DRAWINGS

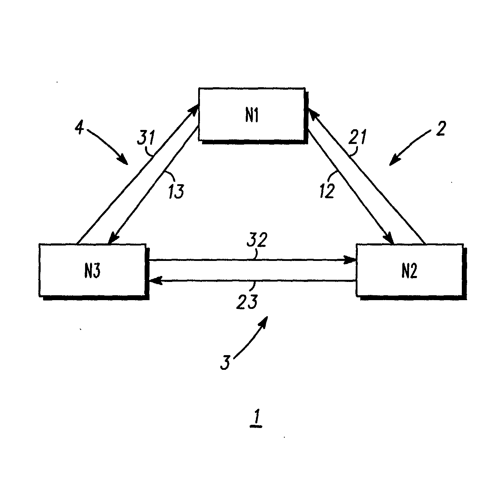

Embodiments of the invention will now be more fully described, by way of example, with reference to the drawing, which shows a preferred embodiment of a fault tolerant voting system in accordance to an embodiment of the invention.

### DETAILED DESCRIPTION OF EMBODIMENTS OF THE INVENTION

Referring to the figure, in an embodiment of the invention, a fault tolerant voting system and method is shown incorporated in a distributed microcontroller system 1. In the embodiment shown, for exemplary purposes, the system 1 is a triplex system that may be used in a brake control system, for example. The system 1 includes nodes N1-N3, which are connected together via three bi-directional buses or links 2-4. The bi-directional links 2-4 may be, for example, FIFOs, dual port memories, fast serial links, or the like. The nodes and buses are arranged as a ring or loop. Additionally, each node is synchronised in time with each other node. There are a wide variety of known time synchronisation methods used in distributed computing and/or microcontroller systems that may be used in this application, for example, the internet network time protocol (NTP), scalar, vector or matrix causality approaches, and the like. It will be appreciated that any number of nodes may be used in the voting system of the invention.

In operation, the links 2-4 and nodes N1-N3 are arranged to send data from each module node in clockwise and anti-clockwise directions around the ring, for example, from N1 to N3 via N2 and from N1 to N2 via N3. For discussion purposes, node N1 is made the reference node, however, each other node N2, N3 have equivalent respective inter-nodal relationships and parameters as N1. Each node module N1-N3 is defined in the system 1 as comprising the following five parameters:
[0] = data at reference node, e.g. N1;
[1] = clockwise bound data from anti-clockwise node, e.g. N3 directly to N1 via link 31;
[2] = anti-clockwise bound data from anti-clockwise node, e.g. N3 via N2 to N1 via links 32, 21;
[3] = anti-clockwise bound from clockwise node, e.g. N2 directly to N1 via link 21;
   and
[4] = clockwise bound from clockwise node, e.g. N2 via N3 to N1 via links 23,31.

As indicated above, each node has an individual set of the five parameters [0] - [4]. The set of parameters may differ from one node to another because there may be, for example, a single floating point inherent to the system, and/or faults in the system.

Voting occurs at each node based on an identical set of comparisons and calculations performed at each node N1-N3. Each node, therefore, may have different parameter values as discussed, however, each node obtains the best answer based on the calculations such that each node achieves the same correct result. Thus, the best answer obtained at each node in the fault tolerant voting system will be the same at each node, even when the corresponding parameters are different values at each node.

One embodiment of the fault tolerant voting system works in the situation that the data is, for example, bitwise identical, that may be the same unless corrected by an error. This embodiment comprises comparing each of the five parameters [0]-[4]. For example, at each node, first the data resident on the reference node [0] is compared with the data received from the other nodes
[1], [2], [3], [4]. Each of the data parameters received from the other nodes is compared with each other, i.e., [1] == [3], [1]==[4], [1] == [2], [2]==[3], [2]==[4], and [3]==[4], where the "==" operation is to mean the values are bitwise equal, which may be calculated by XOR gates, one per bit, for example. Parameters [1],[2] are from the same node, e.g. N2 with N1 as reference node, parameters [3],[4] are from the same node, e.g. N3 with N1 as reference node, and parameter [0] is from the reference node, that is node N1.

If [0] is the same as any of the other values [1]..[4] then the value in node 0 is correct and the "vote" is complete.

If [1]==[2] or [3]==[4] (that is, both values from a unit match) and [1] equals [3] or [4] then value [1] is correct and the "Vote" is complete.

If [1]==[2] or [3]==[4] (that is, both values from a unit match) and [2] equals [3] or [4] then value [2] is correct and the "Vote" is complete.

If [1] == [3] and [2]==[4] then its not possible to complete the vote correctly (and there must be more than 1 fault).

If [1] == [4] and [2]==[3] then its not possible to complete the vote correctly (and there must be more than 1 fault).

If [1]==[3] or [1]==[4] then the value from node 1 is the correct value and the "Vote" is complete.

If [2]==[3] or [2]==[4] then the value from node 2 is the correct value and the "Vote" is complete.

Thus in this embodiment, the above voting comparisons are carried out at each node almost simultaneously and the same (correct best) answer will be found at each node for no or one-fault and in almost all situations where two-faults are present.

Note the "==" operation may also be implemented by comparing a value that is representative of the data, for example in a checkword used in systems such as checksum or cyclic redundancy check techniques, which may prove to be more efficient than comparing all the data. As mentioned above, this embodiment may be suited when the parameters are likely to contain precisely the same values, for example, data that is bitwise identical.

In another embodiment, a median of the parameter comparisons may be introduced into the system to select the best answer, which may be used for applications where the data is not bitwise identical, for example. This embodiment provides a correct result in systems where there may be deviations in the node parameters from node to node inherent in the system. Such deviations may be, for example, due to a floating point value where each parameter will be likely be different, such as in braking systems where the wheel speed measurements may not be identical at each wheel node.

This embodiment further includes taking the median M of the parameters, [0] - [4]. For example, the median may comprise { [0] , [0] , [1] , [2], [3] , [4] } such that two values from each node are represented, therefore, for median symmetry [0] is taken twice. In calculation of the median, any missing or incorrect parameter values due to deviations inherent in the system, assigned "x" value, should be dropped from comparison due to the function of the median. This is performed at each node for each set of five parameters in each node.

In another embodiment, a further median using the results of the comparison with each parameter with the median M may be implemented to refine the best correct answer, and in particular, if there is missing or incorrect parameter values. The median M is then compared with each parameter within an acceptable tolerance t, for example 1%. For example, [0] is checked if M+t<[0] and M-t>[0], and if [0] is outside the acceptable tolerance, then a "x" value is assigned. This comparison to the median M is made with each parameter, e.g. (M+t<[1] and M-t>[1]), (M+t<[2] and M-t>[2]), (M+t<[3] and M-t>[3]), and (M+t<[4] and M-t>[4]). If there are parameter values outside the acceptable tolerance t range, then they will be dropped from consideration as the best answer due to the function of the median. This is performed at each node for each set of five parameters in each node.

It will be appreciated that although the particular embodiments of the invention have been described above, various other modifications and improvements may be made by a person skilled in the art without departing from the scope of the present invention.

## Claims

1. A fault tolerant voting system for a distributed microcontroller network comprising:
a plurality of distributed microcontroller nodes, and a bi-directional link coupled to each of the plurality of nodes arranged to form a ring arrangement, wherein each node is arranged to transmit signals to the link in a first and second direction, and to receive signals from the link in the first and second directions, wherein each node compares the signal transmitted with the signals received from one direction with the signals received from the other direction to determine a best correct result.

2. A fault tolerant voting system as claimed in claim 1, wherein a median is taken of the transmitted signal, and the received signals in said first and second directions to determine the best correct result.

3. A fault tolerant voting system as claimed in claim 2, wherein each signal is compared with the median, wherein if the signal is outside a predetermined acceptable range a second median is taken of the signals within the predetermined acceptable range to determine the best correct result.

4. A fault tolerant voting system as claimed in any preceding claim, wherein a checkword value representative of each signal sent and received, wherein each node compares the checkword value transmitted with the checkword values received from one direction with the checkword values received from the other direction to determine a best correct result.

5. A fault tolerant voting method for a node of a distributed microcontroller network having
a plurality of distributed microcontroller nodes, and a bi-directional link coupled to each of the plurality of nodes arranged to form a ring arrangement, the method comprising the steps of:
transmitting a signal via the link in a first or second direction;
receiving signals from the link in the first and second directions; and
comparing the signal transmitted with the signals received from one direction with the signals received from the other direction to determine a best correct result.

6. A fault tolerant voting method as claimed in claim 5, wherein said comparing step further comprises the step of taking a median of the transmitted signal, and the received signals in said first and second directions to determine the best correct result.

7. A method as claimed in claim 6, wherein said comparing step further comprises the step comparing each signal with the median, wherein if the signal is outside a predetermined acceptable range a second median is taken of the signals within the predetermined acceptable range to determine the best correct result.

8. A method as claimed in claim 5, 6 or 7, further comprising the step of calculating a checkword value representative of each signal sent and received, wherein said comparing step compares the checkword value transmitted with the checkword values received from one direction with the checkword values received from the other direction to determine a best correct result.

9. A fault tolerant voting system substantially as hereinbefore described and with reference to the single figure drawing.

10. A fault tolerant voting method substantially as hereinbefore described and with reference to the single figure drawing.
